# FASCICULE DE BREVET EUROPEEN

(11) **EP 0 449 746 B1**
(45) Date de publication et mention de la délivrance du brevet: **28.07.1993**
(21) Numéro de dépôt: 91420061.3
(22) Date de dépôt: 21.02.1991
(51) Int. Cl.: A23C 19/00, A23C 19/02, A23C 19/072, A23C 19/076, A23C 19/08

(54) **Procédé perfectionné pour la fabrication des fromages à pâte pressée et fromages obtenus**
Verfahren zur Herstellung von Käse aus einer ausgepressten Paste und hierbei erhaltener Käse
Process for the production of cheese from pressed pasta and cheese hereby obtained

(30) Priorité: 06.03.1990 FR 9003072
(43) Date de publication de la demande: 02.10.1991
(73) Titulaire: SOCIETE LAITIERE DE CORNOUAILLE, F-29000 Quimper (FR)
(72) Inventeur: de la Pintière, André, F-29000 Quimper (FR); Merot, Nicolas, F-29370 Elliant (FR)
(74) Mandataire: Laurent, Michel

(56) Documents cités:
- DE-A- 2 437 894
- DE-A- 2 626 323
- GB-A- 1 421 528
- US-A- 4 568 554

## Description

L'invention concerne un procédé perfectionné pour la fabrication des fromages à pâte pressée, notamment des fromages à pâte pressée, cuite ou demi-cuite ; elle se rapporte plus précisément à un perfectionnement dans les étapes de moulage, pressage, acidification et mise en saumure ; l'invention vise enfin les fromages à pâte pressée, cuite ou demi-cuite ainsi fabriqués.

Comme on le sait, pour la fabrication des fromages à pâte pressée, on met en place le caillé dans un premier moule réalisé soit en plusieurs pièces, soit monobloc mais microperforé, notamment en matière plastique, puis on recouvre ce moule d'un couvercle et on presse l'ensemble, de manière à en extraire le lactosérum. Une fois cette opération terminée, on retire le caillé pressé de ce premier moule, pour le poser sur un foncet, ceinturé dans des demi-coquilles pleines ou microperforées en matière plastique de hauteur moindre, que l'on ferme par tous moyens appropriés. En pratique, pendant cette phase d'acidification, le caillé pressé est retourné périodiquement par tous moyens appropriés manuel, mécanique ou automatique. Une fois la phase d'acidification terminée, la meule formée est mise en saumure.

Bien que largement répandue, cette technique présente l'inconvénient de nécessiter deux sortes de moules de hauteurs et parfois même de natures différentes, qu'il faut manipuler, laver, stocker. Celà entraîne un surcoût appréciable, tant dans les investissements, que dans le fonctionnement.

L'invention pallie ces inconvénients. Elle vise un procédé perfectionné du type en question, dans lequel il n'est plus utile de faire appel à plusieurs sortes de moules, ce qui, par voie de conséquence, réduit considérablement le stock de ces moules, les manipulations, le nettoyage, etc.. .

Ce procédé perfectionné, pour la fabrication des fromages à pâte pressée, dans lequel :
- tout d'abord, on met le caillé dans un moule microperforé;
- puis, on recouvre ce caillé d'un couvercle rigide microperforé et on presse sur le couvercle pour extraire le lactosérum du caillé, qui exsude par les microperforations ;
- ensuite, on fait subir au caillé pressé la phase d'acidification dans un moule ;
- et enfin, après démoulage, on met le fromage obtenu en saumure,
se caractérise :
- en ce que pendant la phase de moulage-pressage et pendant la phase d'acidification, on utilise un seul et même moule microperforé ;
- en ce que, une fois que l'on a pressé le caillé dans ce moule unique, on retourne l'ensemble, de sorte que le caillé pressé reposant sur le couvercle on ménage un espace d'air entre le fond du moule dirigé alors vers le haut et le haut du caillé pressé retourné, de manière à laisser se développer la phase d'acidification dans ce moule unique, et par là la formation d'une croûte ;
- puis en ce que, on retourne périodiquement de manière connue cet ensemble en ménageant toujours une couche d'air entre le haut du caillé pressé et selon le cas, le fond du moule renversé ou le couvercle microperfore:
- et enfin, toujours de manière connue, on démoule le fromage formé pour le mettre en saumure.

En d'autres termes, l'invention consiste à utiliser, tant dans la phase de moulage-pressage que dans la phase d'acidification, un moule microperforé unique, de hauteur appropriée pour assurer sans démoulage ces deux opérations de pressage et d'acidification, tout en ménageant pendant la phase d'acidification et lors de chaque retournement, une couche d'air d'épaisseur suffisante pour favoriser la formation d'une croûte régulière.

Avantageusement, en pratique :
- le moule unique et le couvercle sont réalisés dans la même matière plastique, de manière à avoir le même comportement ; on utilise avantageusement les matières plastiques d'usage courant dans ce domaine, tel que polyéthylène ou polypropylène ;
- de manière connue, le moule unique et le couvercle sont microperforés, c'est-à-dire présentent une multitude de microperforations régulièrement réparties, et dont le diamètre est suffisant pour permettre le passage de liquides, notamment au lactosérum, mais est insuffisant pour permettre le passage du caillé ; ces microperforations, dirigées dans le sens de l'épaisseur, peuvent être réalisées de manière connue, notamment par poinçonnage ou par tout autre moyen mécanique ;
- le moule unique est cylindrique et monobloc et les dimensions externes du couvercle épousent sensiblement cote pour cote les dimensions internes du moule ;
- la hauteur du moule unique est suffisante pour assurer la phase de pressage par le couvercle, ainsi que pour permettre le déplacement du fromage en cours de formation lors des retournements successifs et ce, tout en ménageant la couche d'air caractéristique entre, selon le cas, le fond du moule renversé ou le couvercle ;
- les faces internes du moule, c'est-à-dire les parois verticales et le fond, ainsi que la face interne du couvercle, sont striées ou tramées, de manière connue pour assurer en particulier une bonne opération de démoulage;
- le couvercle microperforé présente en périphérie des colonnes régulièrement espacées, orthogonales au plan du couvercle, destinées à être reliées par des moyens tels que vis, chevilles, etc. , avec des plaques verticales métalliques, notamment en acier inoxydable, disposées selon les diamètres du couvercle, pour former ainsi un ensemble rigide de pressage.

La caractéristique essentielle de l'invention consiste, lors de la phase d'acidification dans le moule unique, à ménager une couche d'air de l'ordre de quelques millimètres à quelques centimètres entre la face supérieure du fromage et selon le cas, soit le fond du moule, soit le couvercle, pour permettre ainsi une circulation de l'air à travers les microperforations. Celà permet d'obtenir un séchage correct de la croûte en cours de formation. En pratique, le plus généralement, deux retournements de l'ensemble suffisent. On obtient alors des fromages présentant des faces sèches bien tramées. Si nécessaire, on peut augmenter ce nombre de retournements. Par ailleurs, lors de ces retournements successifs, le talon du fromage se déplace à l'intérieur du moule et coulisse le long des parois. Du fait des striures ou tramages superposés, on renforce la cohésion de ces talons, ce qui est favorable, notamment pour les manipulations ultérieures.

Une fois l'opération d'acidification terminée, on retourne à nouveau le moule unique, de manière à amener le couvercle vers le haut. On retire alors ce couvercle, on retourne à nouveau le moule, ce qui permet d'extraire le fromage formé, avant de l'envoyer en saumure.

La manière dont l'invention peut être réalisée et les avantages qui en découlent, ressortiront mieux de l'exemple de réalisation qui suit à l'appui des figures annexées.

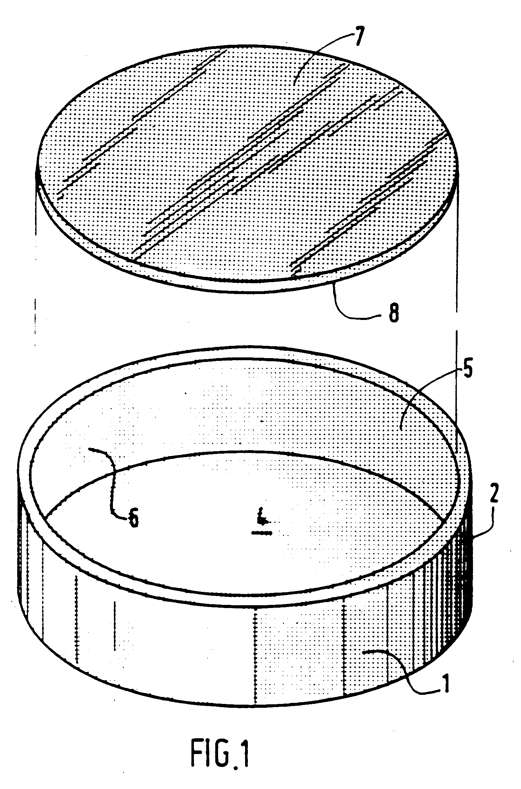

La figure 1 montre en perspective sommaire un moule monobloc unique caractéristique de l'invention.

Les figures 2 à 6 montrent les positions de ce moule lors des différentes étapes caractéristiques du processus de moulage-pressage, puis d'acidification.

Les figures 7 à 10 montrent les différentes séquences de la phase de démoulage avant l'envoi du fromage formé en saumure.

Les figures 11 et 12 illustrent un mode de réalisation pratique du couvercle.

Le moule caractéristique de l'invention désigné par la référence générale (1) est monobloc et cylindrique. Il comprend une paroi verticale (2) et un fond (4). Le sommet de ce moule est ouvert, de manière à ménager un orifice (5) circulaire.

Sur cet orifice, vient se placer un couvercle (7) circulaire, dont le diamètre externe correspond cote pour cote au diamètre interne de l'orifice (5) du moule (1). La face interne du fond (4), la face interne (6) des parois (2) du moule (1) et la face interne (8) du couvercle (7), sont striées de manière connue pour donner un effet de trame.

Dans une forme d'exécution pratique, par exemple pour la fabrication d'emmenthal :
. le moule monobloc (1) et le couvercle (7) sont en matière plastique, notamment en polyéthylène ou polypropylène d'usage courant pour cette application;
. l'épaisseur des parois (2), du fond (4) du moule (1) et l'épaisseur du couvercle (7), est de huit millimètres ;
. le diamètre interne d'ouverture circulaire (5) et le diamètre externe du couvercle (7), est de 780 millimètres ;
. la hauteur des parois internes (6) est de trois cent millimètres.

Le moule (1) et le couvercle (7) présentent une multitude de microperforations traversantes non référencées, de diamètre voisin de quatre à cinq dizièmes de millimètre, obtenues par voie mécanique, notamment par poinçonnage, aptes à laisser passer le lactosérum et à retenir le caillé.

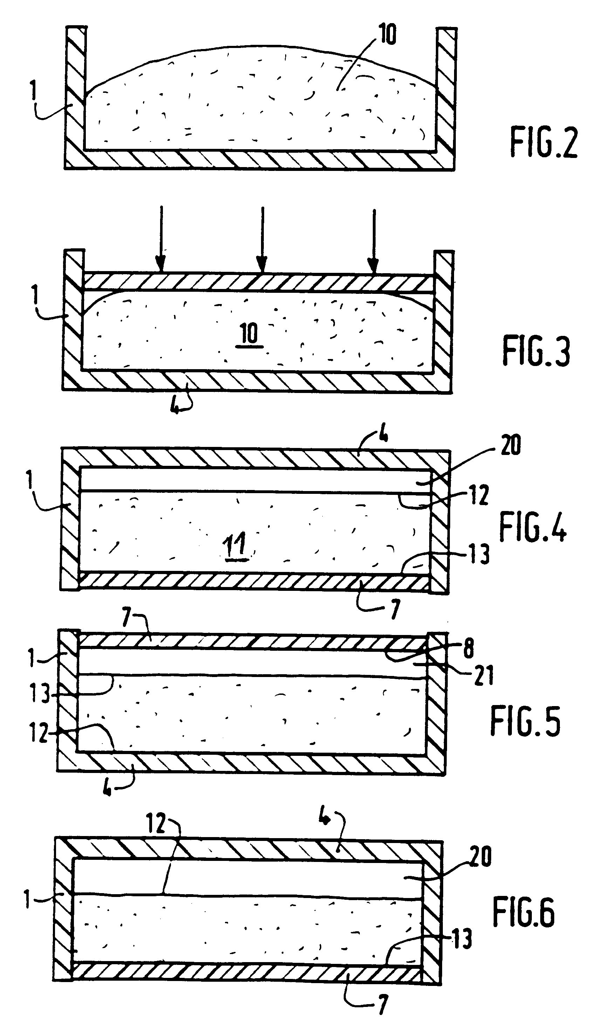

De manière connue (figure 2), on place un caillé (10) dans ce moule monobloc unique (1). On recouvre ensuite ce caillé du couvercle (7) sur lequel, par tous moyens appropriés, on applique une pression (figure 3), de manière à exsuder le lactosérum. Pendant cette phase de moulage-pressage, l'ensemble est mis sous presse pendant une durée appropriée, variable, par exemple de trente minutes à deux heures pour les pâtes pressées, et de deux à quatre heures pour les pâtes pressées cuites.

Lorsque l'exsudation est terminée, on entreprend la phase d'acidification. Pour ce faire, on retourne l'ensemble (figure 4), de sorte que le caillé pressé (11) vient alors au contact du couvercle (7), qui joue alors le rôle de fond. On forme alors, entre le haut (12) du caillé pressé (11) et la face interne du fond (4), un espace d'air, désigné par la référence générale (20), de cinq à trente millimètres d'épaisseur selon la hauteur du caillé pressé (11) et du moule (1). A ce moment, le couvercle (7) constitue le plan de repos de la face supérieure (13) du fromage. Pendant toute cette phase d'acidification, l'air peut circuler dans la couche (20) grâce aux microperforations. Cette circulation favorise l'acidification et par là un séchage correct de la croûte qui se forme.

On retourne ensuite (figure 5) l'ensemble. Du fait du bon ajustement cote pour cote du couvercle (7) sur le moule (1), le couvercle (7) n'a pas tendance à suivre le fromage en cours de retournement. Un nouvel espace d'air (21) est ainsi ménagé qui, à son tour, favorise le séchage de l'autre face (13) du caillé pressé (11).

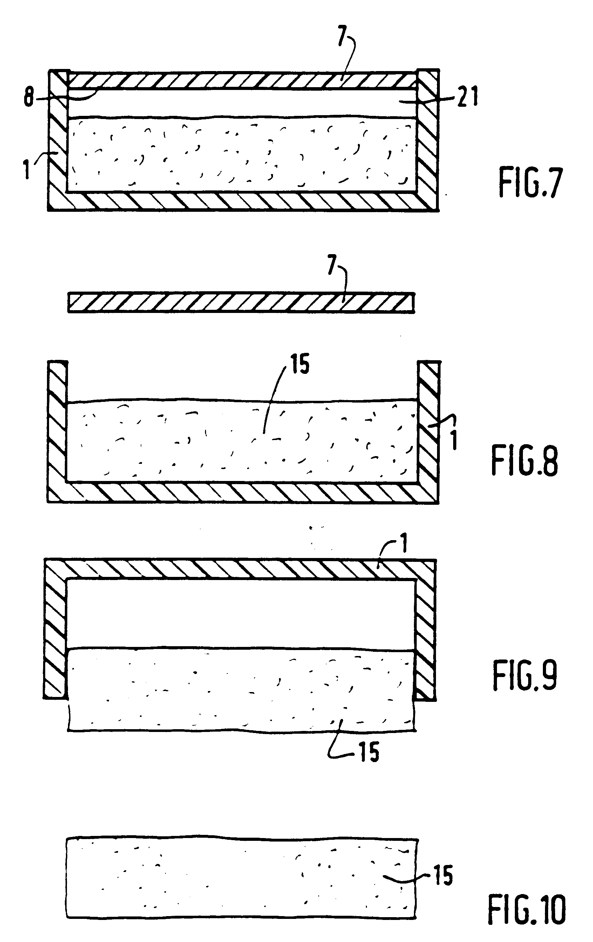

On retourne à nouveau (figure 6) pour amener le couvercle (7) sur le fond.

Lors des différentes opérations de retournement, effectuées soit manuellement, soit mécaniquement, soit automatiquement, le talon de la meule en cours de formation glisse le long des parois (6), ce qui lui confère un relief trame favorable.

Une fois la phase d'acidification terminée, on retourne une dernière fois l'ensemble, de manière à amener le couvercle (7) vers le haut (figure 7). On extrait alors ce couvercle (7) par tous moyens connus (figure 8). On retourne ensuite le moule unique (1) (figure 9), pour dégager le fromage (15) formé (figure 10) que l'on envoie alors au saumurage.

Après nettoyage, le moule unique monobloc (1) et le couvercle (7) sont recyclés.

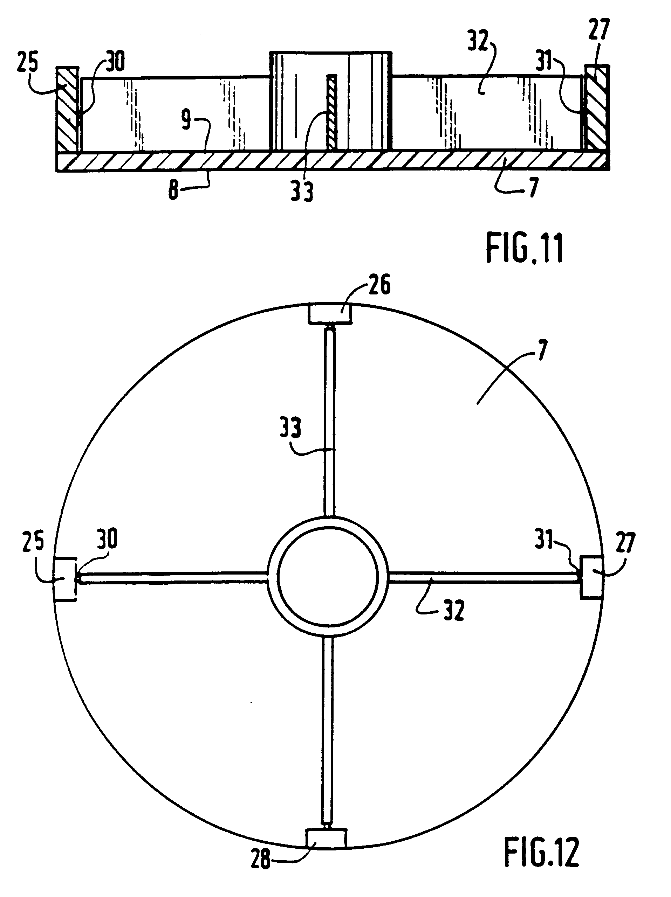

Dans une forme de réalisation pratique (voir figures 11 et 12), le couvercle (7) présente sur sa face supérieure (9), des colonnes (25,26,27,28) régulièrement espacées, orthogonales au plan (9) du couvercle (7), reliées par des vis (30,31) ou analogues en acier inoxydable, à des plaques verticales (32,33), également en acier inoxydable, disposées sur des diamètres pour former un ensemble rigide de pressage. En pratique, les colonnes (25-28) sont en matière plastique et sont soudées sur le couvercle (7) pour former renfort.

Selon la caractéristique originale de l'invention, pendant la phase de moulage-pressage et pendant la phase d'acidification, on utilise un seul et même moule (1), ce qui évite de nombreuses opérations de manutention, de lavage et de stockage.

On obtient ainsi une continuité absolue entre la phase de moulage-pressage et la phase d'acidification, ces deux phases s'effectuant comme déjà dit dans un seul et unique élément de moulage. Il s'ensuit de nombreux avantages.

On peut citer, au niveau du procédé :
. une mécanisation de celui-ci ;
. une simplification du transfet et des opérations intermédiaires entre les différentes étapes ;
. une simplification des opérations de lavage, puisqu'il suffit de l'appliquer à un seul et même moule et non plus à deux moules distincts;
. une amélioration des conditions d'hygiène ;
. une réduction des surfaces de travail nécessaires ;
. une meilleure adaptation plus aisée à des évolutions de produits.

En outre, ce procédé perfectionné présente de nombreux avantages qualitatifs au niveau du produit fini. En effet, grâce aux retournements successifs et au coulissement le long des parois, on obtient un croûtage très fermé et homogène des différentes faces du fromage : face supérieure, face inférieure et talon, conférant ainsi au fromage une meilleure résistance aux contaminations extérieures (bactériologiques, physiques), et une amélioration sensible de l'homogénéité de la pâte et de l'ensemble des qualités organoleptiques du fromage.

Ce procédé peut être utilisé avantageusement dans le processus de fabrication de fromages à pâte pressée, notamment de fromages à pâte pressée cuite ou demi-cuite.

## Revendications

1. Procédé perfectionné pour la fabrication de fromages à pâte pressée, dans lequel :
. tout d'abord, on met le caillé (10) dans un moule (1) microperforé ;
. puis, on recouvre ce caillé (10) d'un couvercle rigide (7) microperforé et on presse sur le couvercle (7) pour extraire le lactosérum du caillé, qui exsude par les microperforations ;
. ensuite, on fait subir au caillé pressé (11) la phase d'acidification dans un moule ;
. enfin, après démoulage, on met le fromage obtenu (15) en saumure,
caractérisé :
- en ce que pendant la phase de moulage-pressage et pendant la phase d'acidification, on utilise un seul et même moule (1,7) microperforé ;
- en ce que, une fris que l'on a pressé le caillé (11) dans ce moule unique (1), on retourne l'ensemble, de sorte que le caillé pressé (11) reposant sur le couvercle (7), on ménage un espace d'air (20) entre le fond (4) du moule disposé alors vers le haut, et le haut (12) du caillé pressé (11) retourné, de manière à laisser se développer la phase d'acidification dans ce moule unique (1), et par là la formation d'une croûte ;
- puis, en ce que on retourne périodiquement, de manière connue, cet ensemble, toujours en ménageant une couche d'air (20,21) entre le haut (12,13) du caillé pressé et, selon le cas, le fond (4) du moule renversé (1) ou la face interne intérieure (8) du couvercle (7) microperforé ;
- et enfin, toujours de manière connue, on démoule le fromage formé (15) pour le mettre en saumure.

2. Procédé selon la revendication 1, caractérisé en ce que le moule unique (1) et le couvercle (7) sont en matière plastique microperforée.

3. Procédé selon la revendication 2, caractérisé en ce que le moule unique (1) est cylindrique et monobloc, et les dimensions externes du couvercle (7) épousent sensiblement cote pour cote les dimensions internes du moule (1).

4. Procédé selon la revendication 1, caractérisé en ce que la hauteur du moule unique (1) est suffisante pour assurer le pressage par le couvercle (7), et pour permettre le déplacement du caillé pessé (11) ou du fromage (15) en cours de formation, lors des retournements de l'ensemble, tout en ménageant une couche d'air (20,21) entre, selon le cas, le fond (4) du moule renversé (1) et la face intérieure (8) du couvercle (7).

5. Procédé selon la revendication 1, caractérisé en ce que les faces internes (4,6) du moule unique monobloc (1) et la face interne (8) du couvercle (7), comportent des stries de tramage.

6. Procédé selon la revendication 2, caractérisé en ce que le moule unique monobloc (1) et le couvercle (7) sont en polyéthylène ou en polypropylène, et présentent une multitude de perforations régulièrement espacées, ayant un diamètre compris entre 0,3 et 0,6 millimètre.

7. Procédé selon la revendication 1, caractérisé en ce que le couvercle microperforé (7) présente en périphérie des colonnes (25-28), régulièrement espacées, orthogonales au plan (9) du couvercle (7), destinées à être reliées (30,31) par des vis à des plaques verticales (32,33) en acier inoxydable, disposées selon des diamètres pour former un ensemble rigide de pressage.

8. Fromages à pâte pressée, cuite ou demi-cuite, susceptible d'être obtenus par la mise en oeuvre du procédé selon l'une des revendications 1 à 7.

## Patentansprüche

1. Verbesserte Verfahren zur Herstellung von Käse aus gepreßter Rohmasse, bei dem
- zuerst das Geronnene (10) in eine mikroperforierte Form (1) gebracht wird,
- anschließend dieses Geronnene (10) mit einem steifen, mikroperforierten Deckel (7) verschlossen und auf den Deckel (7) Druck ausgeübt wird, um das Laktoserum des Geronnenen auszutreiben, das aus den Mikroperforationen austritt,
- anschließend das gepreßte Geronnene (11) der Säuerungsphase in einer Form unterzogen wird
- und schließlich nach Entformung der erhaltene Käse (15) in eine Salzlake gebracht wird,
dadurch gekennzeichnet,
- daß während der Phase der Formpressung und während der Säuerungsphase eine einzige und die gleiche mikroperforierte Form (1, 7) verwendet wird,
- daß, nachdem das Geronnene (11) gepreßt wurde, in dieser Einzelform (1) die Einheit derart gedreht wird, daß das gepreßte Geronnene (11) auf dem Deckel (7) liegt, ein Luftraum (20) zwischen dem nach oben gerichteten Boden (4) der Form und dem gewendeten Oberen (12) des gepreßten Geronnenen (11) eingeführt wird, um die Säuerungsphase und dadurch die Bildung einer Rinde in dieser Einzelform (1) entwickeln zu lassen,
- daß dann in bekannter Weise diese Einheit periodisch gewendet wird, wobei jederzeit eine Luftschicht (20, 21) zwischen dem oberen Teil (12, 13) des gepreßten Geronnenen und, je nach Fall, dem Boden (4) der gewendeten Form oder der inneren Seite (8) des mikroperforierten Deckels (7), vorhanden ist,
- und schließlich in immer noch bekannter Weise der gebildete Käse (15) zum Einbringen in eine Salzlake entformt wird.

2. Verfahren nach Anspruch 1, dadurch gekennzeichnet, daß die Einzelform (1) und der Deckel (7) aus mikroperforiertem Kunststoffmaterial sind.

3. Verfahren nach Anspruch 2, dadurch gekennzeichnet, daß die Einzelform (1) zylindrisch und einstückig ist und daß die äußeren Abmessungen des Deckels (7) sich sehr genau umfänglich an die inneren Abmessungen der Form (1) anlegen.

4. Verfahren nach Anspruch 1, dadurch gekennzeichnet, daß die Höhe der Einzelform (1) ausreichend ist, um eine Pressung durch den Deckel (7) sicherzustellen und um das Verschieben des gepreßten Geronnenen (11) oder des Käses (15) bei dessen Bildung während der Wendungen der Einheit zu gestatten, wobei eine Luftschicht (20, 21) zwischen, je nach Fall, dem Boden (4) der gewendeten Form (1) und der Innenseite (8) des Deckels (7) eingeführt ist.

5. Verfahren nach Anspruch 1, dadurch gekennzeichnet, daß die inneren Seiten (4, 6) der einstückigen Einzelform (1) und der inneren Seite (8) des Deckels (7) Streifungen zur Kreuzrippung aufweisen.

6. Verfahren nach Anspruch 2, dadurch gekennzeichnet, daß die einstückige Einzelform (1) und der Deckel (7) aus Polyethylen oder Polypropylen sind und eine Vielzahl von regelmäßig beabstandeten Perforationen mit einem Durchmesser zwischen 0,3 und 0,6 Millimeter aufweisen.

7. Verfahren nach Anspruch 1, dadurch gekennzeichnet, daß der mikroperforierte Deckel (7) einen Rand von Säulen (25-28) aufweist, die regelmäßig beanstandet rechtwinklig zu der Ebene (9) des Deckels (7) sind und dazu bestimmt sind, durch Schrauben (30, 31) an senkrechte Platten (32, 33) aus rostfreiem Stahl verbunden zu werden, die entlang der Abmessungen zum Bilden einer steifen Einheit zur Pressung angeordnet sind.

8. Käse aus gepreßter Rohmasse, gekocht oder halbgekocht, der dazu geeignet ist, durch die Anwendung des Verfahrens gemäß einem der Ansprüche 1 bis 7 erhältlich zu sein.

## Claims

1. Improved method for manufacturing pressed cheeses, in which:
. first, the curds (10) are placed in a microperforated mould (1);
. next, these curds (10) are covered with a rigid microperforated lid (7) and the lid (7) is pressed on in order to extract the whey from the curds, which whey exudes through the microperforations;
. the pressed curds (11) are then subjected to the souring phase in a mould;
. finally, after release from the mould, the cheese obtained (15) is put in brine,
characterised:
- in that during the moulding/pressing phase and during the souring phase, one and the same microperforated mould (1,7) is used;
- in that, once the curds (11) have been pressed in this single mould (1), the whole thing is turned over, so that the pressed curds (11) rest on the lid (7), an air space (20) is left between the bottom (4) of the mould which is then arranged upwards, and the top (12) of the pressed curds (11) which are inverted, so as to allow the souring phase to develop in this single mould (1), and thereby the formation of a rind;
- then, in that this assembly is turned over periodically, in a known manner, always leaving an air layer (20,21) between the top (12,13) of the pressed curds, and, depending on the case, the bottom (4) of the inverted mould (1) or the lower internal face (8) of the microperforated lid (7);
- and finally, still in a known manner, the formed cheese (15) is released from the mould in order to put it in brine.

2. Method according to Claim 1, characterised in that the single mould (1) and the lid (7) are made of microperforated plastic.

3. Method according to Claim 2, characterised in that the single mould (1) is cylindrical and monobloc, and the external dimensions of the lid (7) substantially match, length for length, the internal dimensions of the mould (1).

4. Method according to Claim 1, characterised in that the height of the single mould (1) is sufficient to allow pressing by the lid (7), and to allow the movement of the pressed curds (11) or of the cheese (15) being formed, when the whole thing is turned over, while leaving an air layer (20,21) between, according to the case, the bottom (4) of the inverted mould (1) and the internal face (8) of the lid (7).

5. Method according to Claim 1, characterised in that the internal faces (4,6) of the single monobloc mould (1) and the internal face (8) of the lid (7), comprise criss-cross ridges.

6. Method according to Claim 2, characterised in that the single monobloc mould (1) and the lid (7) are made from polyethylene or polypropylene, and have a plurality of regularly spaced perforations, with a diameter between 0.3 and 0.6 millimetres.

7. Method according to Claim 1, characterised in that the microperforated lid (7) has at its periphery regularly spaced columns (25-28) which are orthogonal to the plane (9) of the lid (7) and are intended to be connected (30,31) by screws to vertical plates (32,33) made of stainless steel, arranged along diameters in order to form a rigid pressing assembly.

8. Pressed cheeses, either hard or semi-hard, capable of being obtained by implementing the method according to one of Claims 1 to 7.
